# EUROPEAN PATENT SPECIFICATION

(11) **EP 3 224 081 B1**
(45) Date of publication and mention of the grant of the patent: **16.10.2019**
(21) Application number: 15839091.4
(22) Date of filing: 28.12.2015
(51) Int. Cl.: B60N 2/16

(54) **DRIVER'S SEAT HEIGHT ADJUSTMENT MECHANISM**
FAHRERSITZHÖHENVERSTELLMECHANISMUS
MÉCANISME DE RÉGLAGE DE HAUTEUR DE SIÈGE DE CONDUCTEUR

(43) Date of publication of application: 04.10.2017
(73) Proprietor: Assan Hanil Otomotiv Sanayi Ve Ticaret Anonim Sirketi, Zmit/Kocaeli (TR)
(72) Inventor: GÜNER, Aykut, 41305 Izmit/Kocaeli (TR); ILMAN, Ercan, 41305 Izmit/Kocaeli (TR); ARKIN, Erman, 41305 Izmit/Kocaeli (TR); AKBABA, Ugur, 41305 Izmit/Kocaeli (TR); YURDAS, Ali Ihsan, 41305 Izmit/Kocaeli (TR); KADAS, Serkan, 41305 Izmit/Kocaeli (TR); YALCIN, Cagdas, 41305 Izmit/Kocaeli (TR); DEMIREL, Onur Emre, 41305 Izmit/Kocaeli (TR); ÖZCAN, Zafer Serhat, 41305 Izmit/Kocaeli (TR)
(74) Representative: Yamankaradeniz, Kemal
(86) International application number: PCT/TR2015/050276
(87) International publication number: WO 2017/116319

(56) References cited:
- EP-A1- 0 857 606
- EP-A2- 1 857 319
- WO-A1-2012/029461
- FR-A5- 2 210 954

## Description

### TECHNICAL FIELD

The invention relates to a height adjustment mechanism that enables elevating and lowering of the seats by means of the valve system driven by the control arm in driver's seats used in vehicles in a manner to provide ease of use by easy mounting due to light and fast reaction functionality and by increasing comfort without making difficulties for the user.

The invention especially relates to a system, wherein rotation gear mechanism that provides control with reverse circular motion and this rotational motion provided to the cable placed in the rotation gear machanism is transferred to the push rod by means of the cable connected to the push rod on its other end; thus valve mechanism is actuated and the leverage mechanism connected to the seat is activated.

### BACKGROUND OF THE INVENTION

In motor vehicles, driver's seat should be adjusted according to the physical properties of the person and travel comfort. The mentioned adjustment is performed by seat adjustment mechanisms connected to seating or backrest parts of seats. Seat adjustment mechanisms are generally divided into two groups; rotational adjustment mechanisms that adjust the angle of the backrest part or seating part of the seat and linear adjustment mechanisms that adjust the linear position of the seat as a whole, actuated from the seating part of the seat.

In literature, European patent application EP1857319 relates to a mechanism for a vehicle seat adjustment apparatus, wherein this mechanism is provided with a drive component that can be driven in the opposite rotation direction and a drive output component, that can be driven by this drive component and that moves in the opposite rotation direction. The mentioned mechanism is provided with two unidirectional pawl gear clutches between the drive component and drive output component, wherein these clutches are oppositely connected in a manner that the locking direction of the first clutch corresponds to the rotation direction of the second clutch and otherwise the locking direction of the second clutch corresponds to the free rotation direction of the first clutch. Meanwhile, gear pawl clutches are provided with teeth along the circular path.

Each of the single-acting gear pawl clutches is placed in a bearing pin fixed to the related drive component in a moveable manner and they can be pressed against the teeth due to the pressure of the spring. The intended spring for this purpose is designed as a spiral spring acting as a tension spring, which affects the first clutch on one hand and the second clutch on the other hand with its distal ends.

Regarding the partial rotation of the drive output component against the drive component known from the design in the European patent application "EP1857319", in principle, the drive component is formed as a semi-hollow cylindrical collar that serves as a driving actuator, that is supported by bearings in a rotatable manner and that extends to the hand wheel. Around its axis of rotation, the mentioned collar is loaded selectively by the torque affecting the hand wheel and by the direction of the torque due to rotation; one of the locking pawls is disengaged from the gear pawl clutch and the other gear pawl clutch is locked. Therefore the related pawl and clutch are actuated by rotating the drive component by means of the stop pin fixed to the drive component. The drive component, by the single-acting spiral spring that is in engaged position as before acts, by rotating the teeth driving mechanism belonging to both gear pawl clutches by means of the other gear pawl clutch.

For pivoting of the drive component in the opposite direction, a torque similarly in the opposite direction can be applied to the hand wheel. Here, the condition described above is reversed. Consequently, according to the description above, disengaged gear pawl clutch remains in engaged position and it is used to transfer the torque due to rotation to the drive component. The other clutch is disengaged appropriately by means of the collar.

For both conditions, a stop pin is connected to the disengaged gear pawl clutch in order to enable the transmission of torque from the hand wheel to the drive component in its direction of rotation.

Although the mechanism known from the European patent application "EP1857319" is currently used in vehicle seat adjustment apparatus; the fact that parts used in the system have a complex form, they are not suitably producible, simply structured and compact from the modular point of view makes it harder to produce them. Therefore, it has disadvantages in terms of costs and ease of mounting of the system.

Consequently, the existence of the abovementioned problems and absence of any existing solutions has necessitated making an improvement in the related technical field.

### OBJECT OF THE INVENTION

The object of the invention is to solve the abovementioned problems, eliminate all disadvantages and provide additional advantages to the structure.

Another object of the invention is to design a novel height adjustment mechanism, in order to perform the height adjustment of vehicle seats with the motion provided, in a manner to increase the user's comfort without having difficulty by means of light and fast reaction functionality, wherein rotational motion is provided in a bidirectional manner by the gear mechanism that can move in the opposite direction and is placed in the control system and moreover user's comfort is provided by stabilizing the position at the desired height by the adjustment mechanism.

Another object of the invention is to aid the system weight and seat weight in general.

Another object of the invention is to provide a modular system and thus ease of mounting.

Therefore, costs are reduced due to easy mounting and time saving in the assembly line.

Another object of the invention is to enable easy dismounting and mounting of the system at the point, where it is mounted to the seat (on the general system) due to its modularity.

Another object of the invention is to provide the stage feeling to the user and to enable the user to do the stage adjustment at the desired ease and comfort during travel.

Another object of the invention is to provide the comfort of the user by means of valves reaching the balance position at the desired speed and accuracy.

Another object of the invention is to produce a low-cost product due to the low number of parts in the whole system.

Another object of the invention is to provide the user with full command and control of the system due to synchronized operation of the system and thus not experiencing system gaps and backlashes.

Another object of the invention is to provide ease of mounting and modularity. Therefore, there is extra space for other systems inside the seat.

### DESCRIPTION OF FIGURES

Figure-1; A perspective view of the height adjustment mechanism according to the invention.
Figure-2; A perspective view of the height adjustment lock mechanism according to the invention.
Figure-3; A view of the cross-section of the height adjustment lock mechanism according to the invention.
Figure-4; An exploded perspective view of the height adjustment lock mechanism according to the invention.
Figure-5; A view of the cross-section of the height adjustment lock mechanism according to the invention.
Figure-6; An exploded perspective view of the height adjustment valve mechanism according to the invention.

### REFERENCE NUMBERS

- 100.: Valve mechanism
- 101.: Push rod shaft
- 102.: Arm rod
- 103.: Cable
- 104.: Spring arm load
- 105.: First push rod
- 106.: Second push rod
- 107.: Pulling Cable length adjuster
- 108.: Clockwise
- 109.: Counterclockwise
- 110.: Valve
- 111.: Valve actuation pin
- 200.: Lock mechanism.
- 230.: Shaft
- 250.: Rotation gear mechanism.
- 251.: First gear pawl
- 252.: Second gear pawl
- 253.: First gear pawl push
- 254.: Gear pawl pin
- 255.: Second gear Pawl push
- 256.: First outer gear
- 257.: Second outer gear
- 258.: Hard-stop
- 259.: Out gear in-thread
- 260.: Stage thread
- 261.: Dip
- 262.: Dip hole
- 270.: Lever assy
- 271.: Inner spring
- 272.: Lever
- 273.: Retaining spring
- 274.: Inner sleeve
- 275.: Cap nut
- 276.: E-ring
- 280.: Ball-catch pin mechanism.
- 281.: Pin catch nut
- 282.: Pin catch spring
- 283.: Ball catch pin
- 290.: Mounting bracket
- 291.: Bolt
- 300.: Height adjustment mechanism

### DETAILED DESCRIPTION OF THE INVENTION

In this section, height adjustment mechanism (300) of the invention will be described more clearly.

The invention is a mechanism that performs height adjustment by means of the height adjustment mechanism composed of - the first gear pawl (251) and the second gear pawl (252) that enable locking and that are located inside the first and second outer gears (256, 257) that provide the rotational motion in its structure in a clockwise (108) and counterclockwise (109) manner; second gear pawl push (255) that actuates these elements; first gear pawl push (253) that acts as a bearing for these elements; gear pawl pin (254) and E-ring (276) that are connecting components keeping the mentioned elements together; inner springs (271) that keep the mentioned connecting components axially stable; lever (272) that enables the control of the system by the user; retaining springs (273) that provide the returning of this lever to its initial horizontal position; shaft (230) that transmits the drive provided by the user to second gear pawl push (255) and that keeps the whole system together; ball catch pin (283), pin catch nut (281) and pin catch spring (282) that apply force against the opposite impacts on the system; cable (103) and pulling cable length adjuster (107) that transfer the stage adjustment from this system to subsequent elements; mounting bracket (290) keeping the whole system together and bolts (291) that provide the connections of this mounting bracket (290) - and the cable(103) by connecting to the valve mechanism (100) and lock assy (200) with the aid of the elements push rod shaft (101), arm rod (102), spring arm load (104), first push rod (105), second push rod (106), pulling cable length adjuster (107), valve (110), valve actuation pin (111) within this assy.

Figure-1 shows the height adjustment mechanism (300) according to the invention and Figure-2 shows the isometric view of the lock mechanism (200). Lock mechanism (200) is mounted between the lever mechanism (270), otation gear mechanism (250) and the ball catch pin mechanism (280). Height adjustment mechanism (300) provides the user with a height adjustment at the desired stage and comfort during travel. Figure-4 shows the exploded view of the lever mechanism (270) and rotation gear mechanism (250) constituting the system.

Rotation gear mechanism (250) is axially grouped by the shaft (230) that keeps the system together and shaft (230) is fixed by the cap nut (275). Rotation gear mechanism (250) has many functions here. Rotation gear mechanism (250) performs stage adjustment on one hand by means of the teeth of out gear in-thread (259) located inside first and second outer gears (256, 257) and by means of the first gear pawl (251) and second gear pawl (252). This motion is performed by means of the first gear pawl (251) and second gear pawl (252); first gear pawl push (253) that aids its motion by holding on to the teeth of out gear in-thread (259) located inside the first and second outer gears (256, 257); gear pawl pin (254) and E-ring (276). The same system also exists on other surfaces of the first and second outer gears (256, 257), wherein when the first outer gear (256) and first gear pawl (251) are in lock position; the second outer gear (257) and second gear pawl (252) are in free position. In the opposite situation, when second outer gear (257) and second gear pawl (252) are in lock position, the first outer gear (256) and first gear pawl (251) are in free position and teeth of out gear in-thread (259) are skipped. These reverse rotational movements provide bidirectional motion opportunity to the user. These rotational movements have a certain number of stages, wherein when the last stage is reached; movement is limited by means of the hard-stop (258) placed on surfaces of the first and second outer gears (256, 257). By means of the hard-stop (258) placed on the gear pawl push (253) contained within the abovementioned rotation gear mechanism (250); a dip (261), opened on the first and second outer gears (256, 257), pairs with the dip hole (262) on the gear pawl push (253) so as to provide safety during changing stages.

Stage threads (260) are designed to suit the outer surface of the mentioned rotation gear mechanism (250), wherein the ball catch pin assy (280) provides balance in the system by applying a force on these stage threads (260) in the opposite direction. While ball catch pin mechanism (280) performs this function, it enables changing stages between the mentioned stage threads (260) by means of the pin catch spring (282) comprised by the ball catch pin mechanism (280); and stability is provided by making sensitivity adjustment by the pin catch nut (281) for the sustainability of force.

The user makes the desired height adjustment by means of the lever assy (270). Torque is transmitted to the rotation gear mechanism (250) via the shaft (230) that is connected to the lever (272) and that keeps the system together. The returning motion of the lever (272) back to its initial position is performed by retaining springs (273) in counterclockwise (109) direction. The user is provided with convenience by returning the lever (272) back to its initial position, after each stage change, by means of the retaining springs (273). Mentioned retaining springs (273) that are partially connected to the mounting bracket (290), are set up according to the position of the lever (272) and they perform the mentioned return movement in counterclockwise (109) direction.

Mounting bracket (290), on which the rotation gear mechanism (250), ball catch pin mechanism (280) and lever assy (270) in the system are mounted together, constitutes the external structure of the system. Mounting bracket (290) acts as a bearing for the system by serving as a body in motion transfer in this whole operating system. It also serves as a roof in protecting the system for external effects. Inner springs (271) and the inner sleeve (274) that are located between the mounting bracket (290) and rotation gear mechanism (250) and that have shaft (230) passing through them, help maintain the position of the rotation gear mechanism (250).

Rotation gear mechanism (250) transmits the motion provided by the user to the valve mechanism (100) by means of the cable (103). Cable (103) is connected to the rotation gear mechanism (250), wherein its length changes in accordance with rotational motion of this assy provided by the user. This change actuates the air driven system and thus, height adjustment is made.

Height adjustment mechanism (300) which successfully provides solutions for the abovementioned technical problems, enables making vehicle seat height adjustments and is to be extensively used due to modularity, cost effectiveness, easy mounting and increased comfort of the user during travel.

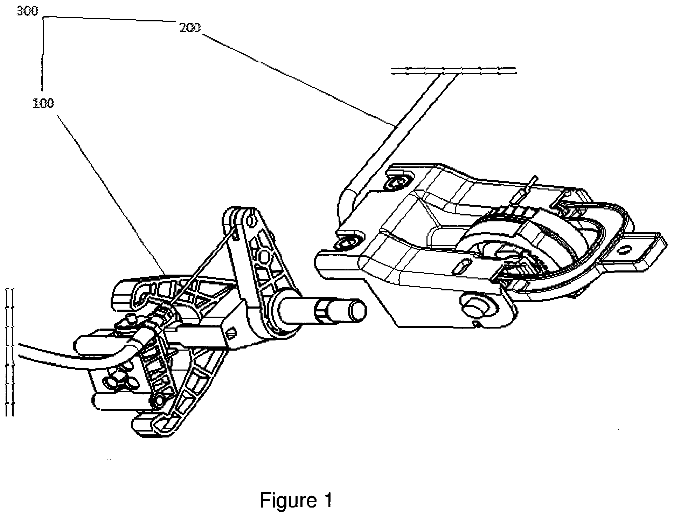

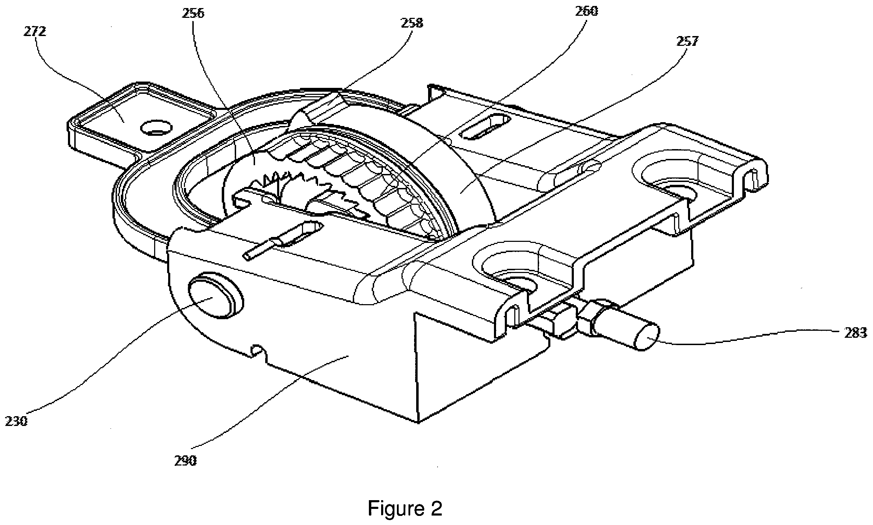

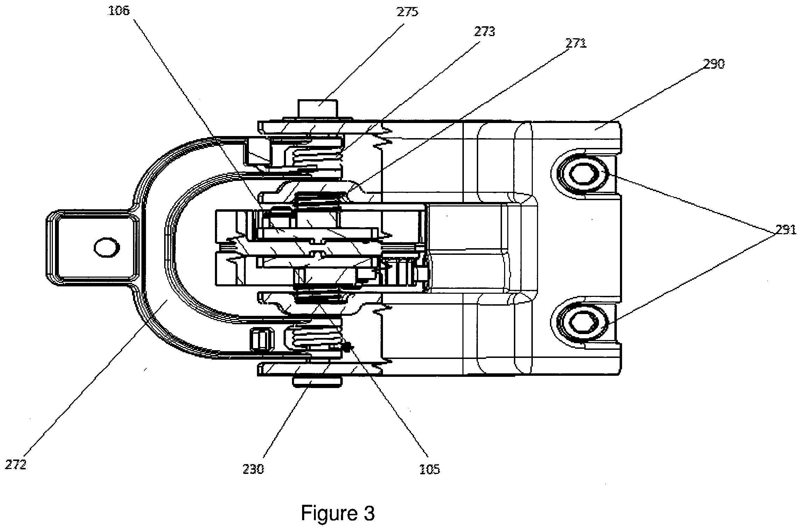

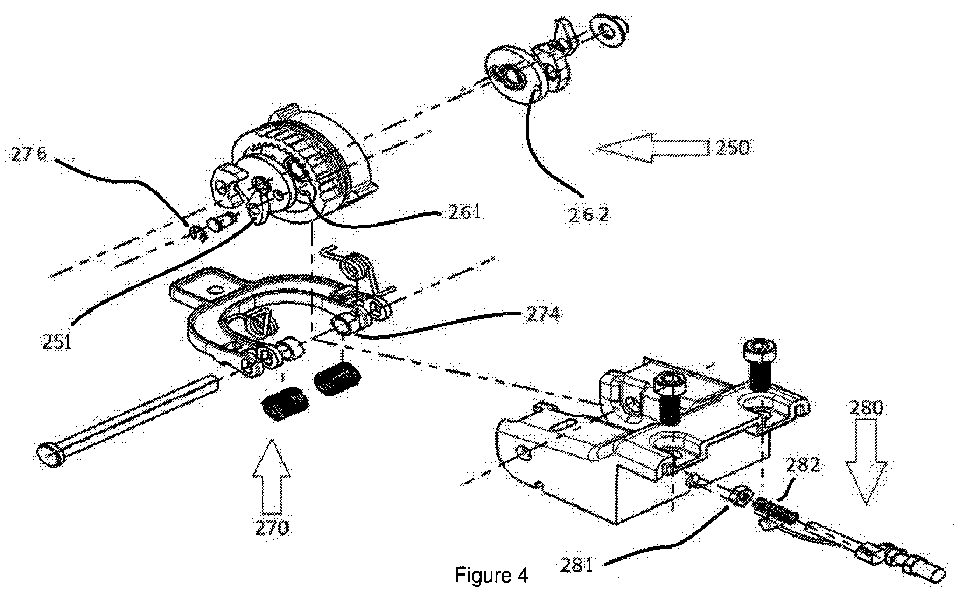

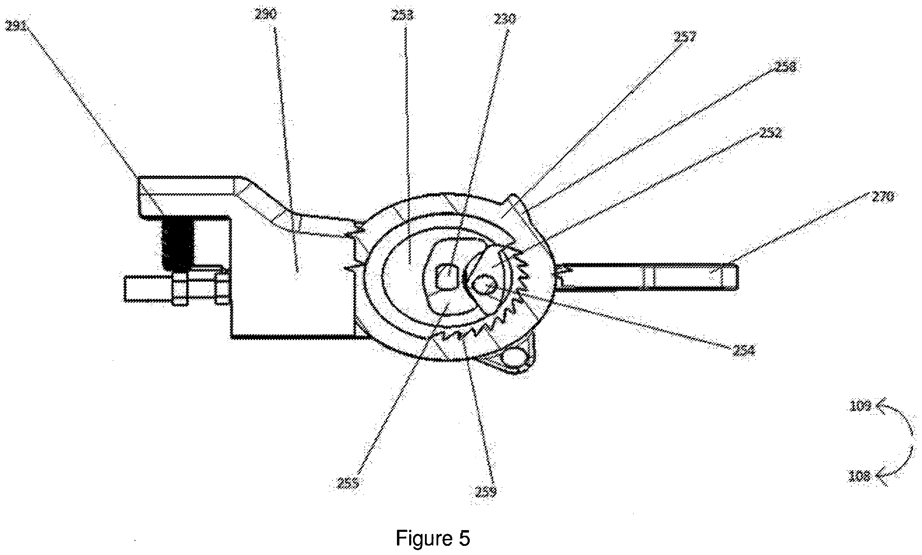

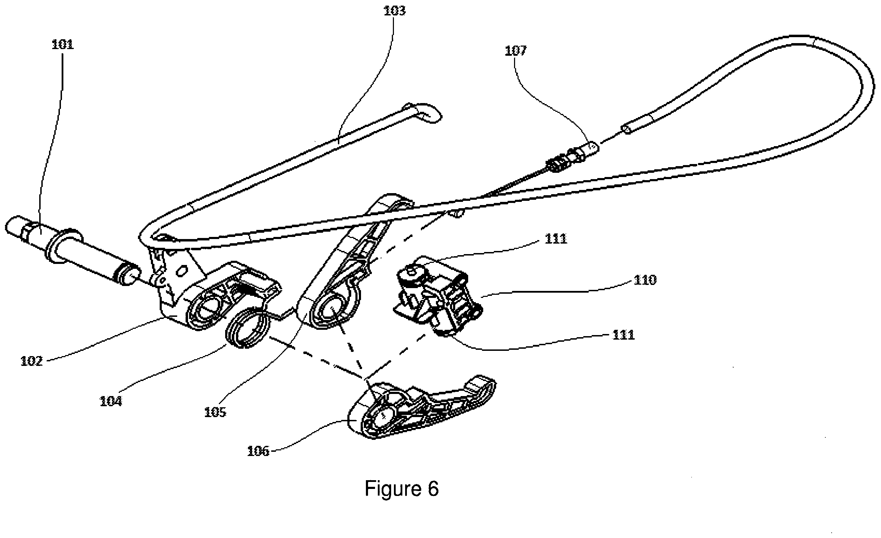

## Claims

1. A height adjustment mechanism (300) for driver's seats in vehicles, **characterized by**
• a shaft (230), that is positioned in a manner to pass inside a rotation gear mechanism (250) and a mounting bracket (290); that transmits the drive provided by the user to a second gear pawl push (255) and that keeps the whole system together,
• first and second gear pawls (251,252) that are placed on the rotation gear mechanism (250), perform the locking motion in relation to the rotation gear mechanism (250) and enable the stage adjustment achieved depending on this motion,
• and a first gear pawl push (253) that acts as a bearing for a second gear pawl push (255), which actuates these elements, and
• first and second outer gears (256, 257) that are placed inside the rotation gear mechanism (250) and that adjust the stage of height by means of the stage threads (260) placed on them.

## Patentansprüche

1. Höheneinstellmechanismus (300) für Fahrersitze in Fahrzeugen, **gekennzeichnet durch**:
• eine Welle (230), die in einer Weise positioniert wird, innerhalb eines Drehgetriebemechanismus zu verlaufen (250) und ein Montagebügel (290); der den durch den Benutzer bereitgestellten Antrieb an ein zweites Getriebeklinkendruckstück (255) überträgt und der das gesamte System zusammenhält,
• eine erste und zweite Getriebeklinke (251, 252), die auf dem Drehgetriebemechanismus (250) platziert werden, die Sperrbewegung in Bezug auf den Drehgetriebemechanismus (250) ausführen und die abhängig von dieser Bewegung erreichte Stufeneinstellung ermöglichen,
• und ein erstes Getriebeklinkendruckstück (253), das als ein Lager für ein zweites Getriebeklinkendruckstück (255) wirkt, das diese Elemente betätigt, und
• ein erstes und zweites Außenzahnrad (256, 257), die innerhalb des Drehgetriebemechanismus (250) platziert werden und die die Höhenstufe mittels der auf ihnen platzierten Stufengewinde (260) einstellen.

## Revendications

1. Mécanisme de réglage de hauteur (300) pour le siège du conducteur dans des véhicules, **caractérisé par** :
• un arbre (230), qui est positionné de manière à passer à l'intérieur d'un mécanisme à pignon de rotation (250) et d'un support de montage (290) ; qui transmet l'entraînement fourni par l'utilisateur à un deuxième dispositif de poussée à cliquet et pignon (255) et qui maintient tout le système assemblé,
• des premier et deuxième cliquets de pignon (251, 252) qui sont placés sur le mécanisme à pignon de rotation (250), exécutent le mouvement de verrouillage par rapport au mécanisme à pignon de rotation (250) et permettent d'obtenir le réglage de l'étage en fonction de ce mouvement,
• et un premier dispositif de poussée à cliquet et pignon (253) qui joue le rôle de palier pour un deuxième dispositif de poussée à cliquet et pignon (255), qui actionne ces éléments, et
• des premier et deuxième pignons extérieurs (256, 257) qui sont placés à l'intérieur du mécanisme à pignon de rotation (250) et qui règlent l'étage de hauteur au moyen des cannelures d'étages (260) disposées dessus.
